# EUROPÄISCHE PATENTANMELDUNG

(11) **EP 4 477 781 A1**
(43) Veröffentlichungstag der Anmeldung: **18.12.2024**
(21) Anmeldenummer: 24176116.2
(22) Anmeldetag: 15.05.2024
(51) Int. Cl.: C25B 1/04, C25B 9/015, C25B 1/044, C25B 9/15, C25B 9/13, C25B 9/60

(54) **VORRICHTUNG UND VERFAHREN ZUR ELEKTROLYSE**

(30) Priorität: 15.06.2023 DE 102023115746
(71) Anmelder: Messer SE & Co. KGaA, 65812 Bad Soden am Taunus (DE)
(72) Erfinder: Berger, Thomas, 45257 Essen (DE); Rohovec, Joachim, 2500 Baden bei Wien (AT)

(57) **Zusammenfassung**

Ein Verfahren sowie eine Vorrichtung zur Gewinnung von Gasen durch elektrochemische Zerlegung eines flüssigen Elektrolyten weist eine zylindrische Reaktionskammer mit koaxial zueinander angeordneten Elektroden auf, zwischen denen ein flüssiger Elektrolyt strömt. Durch Anlegen einer Gleichspannung entstehen an den Oberflächen der die Elektroden gasförmige Reaktionsprodukte in Form von Gasblasen, die zunächst an den Oberflächen der Elektroden haften bleiben, bevor sie im flüssigen Elektrolyten aufsteigen und anschließend aufgefangen werden, Erfindungsgemäß ist vorgesehen, dass der Elektrolyt in eine rotierende Bewegung um die Längsachse der Reaktionskammer gebracht wird. Dadurch lösen sich die Gasblasen schneller von den Elektrodenoberflächen.

## Beschreibung

Die Erfindung betrifft eine Vorrichtung zur Gewinnung von Gasen durch elektrochemische Zerlegung eines flüssigen Elektrolyten, mit einer im Betrieb der Vorrichtung mit einem aus dem flüssigen Elektrolyten bestehenden Elektrolytbad zumindest teilweise gefüllten Reaktionskammer, die mit einer Zuströmleitung für den flüssigen Elektrolyten und mit wenigstens einer Gasabzugsleitung zum Abführen von bei der Elektrolyse erzeugten Gasen ausgerüstet ist und in der wenigstens eine anodische Elektrode und wenigstens eine kathodische Elektrode angeordnet sind, welche Elektroden als konzentrisch um eine Längsachse und radial voneinander beabstandet angeordnete Hohlzylinder ausgebildet sind. Die Erfindung betrifft des Weiteren ein entsprechendes Verfahren.

In üblichen Vorrichtungen zur Gewinnung von Gasen durch elektrochemische Zerlegung eines leitfähigen Elektrolyten, hier auch als "Elektrolyseure" bezeichnet, sind zwei Elektroden, eine Anode und eine Kathode, in einem Bad eines flüssigen Elektrolyten, z.B. einer wässrigen Lösung von Kaliumhydroxid (KOH), angeordnet. Bei Anlegen einer Gleichspannung entstehen oberhalb einer gewissen Mindestspannung an der Oberfläche der Elektroden Reaktionsprodukte aus den im Elektrolyten enthaltenen Stoffen. Im Falle der elektrochemischen Zerlegung von Wasser wird an der Kathode Wasserstoffgas erzeugt und an der Anode Sauerstoffgas. Durch eine zwischen den Elektroden angeordnete Trennmembran, die selektiv den Durchgang von Ionen, nicht aber von Gas, erlaubt, wird verhindert, dass sich die entstehenden Gase vermischen, während sie in Form von Gasblasen im flüssigen Elektrolyten aufsteigen. Oberhalb des flüssigen Elektrolyten befinden sich voneinander gasdicht getrennte Kammern zum separaten Auffangen der beiden auf diese Weise erzeugten Gase.

Die während der Elektrolyse an der Oberfläche der Elektroden entstehenden Gasblasen haften dort zunächst an; erst ab einer gewissen Größe lösen sie sich aufgrund des Auftriebs und abhängig von der Oberflächenspannung und dem Benetzungswinkel ab und steigen im flüssigen Elektrolyten auf. Wichtig für die Effizienz von Elektrolysen ist es, ein räumlich und zeitlich möglichst homogenes System hinsichtlich Strom und Spannung sowie der Temperatur bereitzustellen; die lange an der Oberfläche der Elektroden anhaftenden Gasblasen führen zu jedoch vergleichsweise großen Blasen im flüssigen Elektrolyten, die lokal den Stromfluss stören und zu Strom- und Spannungsspitzen führen, die die Effizienz des Elektrolyseverfahrens reduzieren. Die Folge ist ein erhöhter Energiebedarf für die Erzeugung der Gase.

Um zu erreichen, dass sich die generierten Gasblasen möglichst frühzeitig von den Oberflächen ablösen, wird beispielsweise in der EP 2 389 460 A1 vorgeschlagen, die Elektroden mittels eines eingebauten Schwingungserzeugers zu bewegen, was allerdings einen beträchtlichen apparativen Aufwand mit sich bringt. Alternativ dazu wurde bereits vorgeschlagen, mittels einer Pumpe eine Strömung im Elektrolyten entlang der Elektrodenoberfläche zu erzeugen, um die daran anhaftenden Gasblasen zu vertreiben. Eine solche Anordnung findet sich beispielsweise in der WO 2014/170337 A1. Die Umwälzung des Elektrolyten durch die Zwischenräume zwischen den oft dicht nebeneinander angeordneten Elektroden hindurch ist allerdings mit einem hohen Energieaufwand verknüpft.

In Elektrolyseuren sind die Elektroden meist in Form einer Vielzahl von parallel zueinander angeordneten Flächen innerhalb einer vom Elektrolyten gefüllten Reaktionskammer angeordnet. Daneben gibt es jedoch auch radialsymmetrisch aufgebaute Elektrolyseure, wie beispielsweise in der WO 2004/076721 A2 oder der WO 2021/102494 A1 beschrieben. Bei diesen liegen eine oder mehrere Anoden sowie eine oder mehrere Kathoden im Gestalt von koaxial zueinander angeordneten Röhren bzw. Holzylindern vor; die Elektrolysereaktion läuft also in radialer Richtung ab. Derartige radialsymmetrisch aufgebaute Elektrolyseure können im Übrigen auch durch Parallelschaltung zu größeren Elektrolyseeinheiten zusammengefasst werden. Die vorliegende Erfindung bezieht sich auf einen derartigen radialsymmetrischen Elektrolyseur bzw. auf ein in einem derartigen Elektrolyseur ablaufendes Elektrolyseverfahren.

Bei dem aus der WO 2021/102494 A1 bekannten System zum Erzeugen von gasförmigem Wasserstoff und Sauerstoff wird der Raum zwischen den konzentrisch zueinander angeordneten Elektroden in Längsrichtung von einem flüssigen Elektrolyten durchströmt. Die Elektroden sind so geformt, dass sie abschnittsweise Verengungen im Strömungsquerschnitt bilden. Diese erzeugen im fließenden Elektrolyten turbulente Strömungen, durch die die während des Elektrolysevorgangs entstehenden Gasblasen beschleunigt von den Elektrodenflächen abgelöst werden sollen. Die spezielle Geometrie der Elektroden ist allerdings recht aufwendig in der Herstellung und führt zu inhomogenen Spannungsverhältnissen in der Elektrolyseeinheit, welche die Effizienz der Elektrolyseeinheit mindern.

Der Erfindung liegt daher die Aufgabe zu Grunde, eine Vorrichtung und ein Verfahren zur elektrolytischen Erzeugung von Gasen aus einem flüssigen Elektrolyten anzugeben, bei dem sich während der Elektrolyse bildende Gasblasen rasch von der Oberfläche der Elektroden abgelöst werden.

Gelöst ist diese Aufgabe durch ein eine Vorrichtung mit den Merkmalen des Patentanspruchs 1 und durch ein Verfahren mit den Merkmalen des Patentanspruchs 7. Vorteilhafte Ausgestaltungen der Erfindung sind in den Unteransprüchen aufgeführt.

Eine erfindungsgemäße Vorrichtung der eingangs genannten Art und Zweckbestimmung ist also dadurch gekennzeichnet, dass in der Reaktionskammer Mittel zur Erzeugung einer um die Längsachse rotierenden Strömung im Elektrolytbad vorgesehen sind.

Die Elektroden sind innerhalb der Reaktionskammer konzentrisch um die Längsachse, jedoch radial voneinander beabstandet, angeordnet; die Anode kann dabei radial innen und die Kathode außen angeordnet sein, wie auch umgekehrt, die Kathode innenseitig und die Anode außen. Die Elektroden sind zumindest abschnittsweise aus einem leitfähigen Material gefertigt oder zumindest auf einer Oberfläche, bevorzugt der jeweils radial innen gelegenen Oberfläche, mit einer leitfähigen, beispielsweise metallischen Beschichtung versehen. Im Betrieb der Vorrichtung ist die Reaktionskammer bevorzugt vertikal angeordnet, also mit im Wesentlichen senkrecht verlaufender Längsachse, und vollständig oder bis zu einer gewissen Füllhöhe mit einem Bad aus einem flüssigen Elektrolyten (Elektrolytbad) gefüllt; der Elektrolyt kann sich im Raum zwischen den Elektroden bzw. zwischen den Elektroden und einer zwischen ihnen vorliegenden Trennmembran zumindest in Umlaufrichtung frei bewegen. Durch Anlegen einer Spannung zwischen den Elektroden kommt es in an sich bekannter Weise zur elektrochemischen Zerlegung von Bestandteilen des Elektrolyten. Dabei werden an den elektrisch leitenden Oberflächen der Elektroden gasförmige Reaktionsprodukte erzeugt, die in Form von Gasblasen zunächst an den Oberflächen der Elektroden anhaften, sich jedoch nach Erreichen einer gewissen Größe von dieser lösen und entlang der Elektrodenoberfläche nach oben steigen. Das Gas wird schließlich aufgefangen und einer weiteren Verwendung zugeführt. Das Auffangen des Gases erfolgt entweder getrennt nach Reaktionsprodukten oder als Gasgemisch.

Um das Auftreten großer Gasblasen auf den Elektrodenoberflächen zu unterbinden sowie diese in radialer Richtung von der Elektrodenoberfläche zu entfernen, wird das die Elektroden in der Reaktionskammer umgebende Elektrolytbad in eine um die Längsachse rotierende Bewegung versetzt. Die rotierende Bewegung des Elektrolytbades führt zu Fliehkräften, die die radiale Trennung von Substanzen unterschiedlicher Dichte begünstigen. Dabei wird der vergleichsweise dichte flüssige Elektrolyt nach außen getrieben und verdrängt die leichteren Gasblasen von der jeweils radial innenseitigen Oberfläche der Elektroden. Die Gasblasen lösen sich von der Oberfläche der Elektroden ab und streben aufgrund ihrer geringen Dichte radial nach innen, wo sie im rotierenden Elektrolytbad gasreiche Zonen ausbilden, in denen sie rasch aufsteigen. Eine solche gasreiche Zone befindet sich im Zentrum der Reaktionskammer im Bereich der Längsachse; bei Vorhandensein einer gasdichten Trennmembran im Elektrolytbad zwischen Anode und Kathode befindet sich eine weitere gasreiche Zone radial außenseitig an dieser Trennmembran. Das Auftreten lokaler Strom- bzw. Spannungsspitzen wird so wirkungsvoll reduziert und die Isotropie der Reaktionsbedingungen in der Reaktionskammer senkrecht zur Längsachse verbessert.

Bevorzugt ist in der Reaktionskammer, koaxial zu Anode und Kathode, jedoch radial zwischen diesen, eine ionendurchlässige, jedoch gasdichte Trennmembran angeordnet. Dadurch ist eine Separation der gasförmigen Reaktionsprodukte möglich. Die Trennmembran ist dabei bevorzugt radial beabstandet von der jeweils äußeren Elektrode angeordnet, um eine Zone zu schaffen, in der sich die Gasblasen in einer gewissen Entfernung zur Oberfläche der äußeren Elektrode sammeln können. Zur inneren Elektrode ist dagegen kein radialer Abstand der Trennmembran erforderlich, da sich die dort entstehenden Gasblasen aufgrund der Rotationsbewegung des Elektrolytbades radial nach innen, also von der Trennmembran weg, bewegen. Bei der Trennmembran handelt es sich bevorzugt um ein in der Elektrolyse üblicherweise verwendete, für Anionen oder Kationen durchlässiges Diaphragma, wie beispielsweise eine Protonen-Austausch-Membran (PEM). Bei Einsatz einer Protonen-Austausch-Membran ist bevorzugt die innere Elektrode (Kathode oder Anode) als leitfähiges Medium auf der Trennmembran aufgetragen. Die Wasserstoff-Ionen diffundieren durch die protonenleitende Membran in Richtung Kathode, wo sie mit Elektronen zu Wasserstoff kombinieren.

Um die erzeugten gasförmigen Reaktionsprodukte separat voneinander auffangen zu können, sind zweckmäßigerweise getrennte Gasabzugsleitungen vorgesehen, die von einem oberen Abschnitt der Reaktionskammer abführen. Der obere Abschnitt der Reaktionskammer ist dazu, entsprechend einer im Elektrolytbad ggf. vorliegenden Trennmembran, mit einer gasundurchlässigen Trennwand ausgerüstet, die ein Vermischen der aufsteigenden gasförmigen Reaktionsprodukte verhindert.

Als Mittel zum Erzeugen der rotierenden Strömung im Elektrolytbad kommen bevorzugt die im Folgenden beschriebenen Einrichtungen zum Einsatz.

Ein erstes bevorzugtes Mittel zum Erzeugen der rotierenden Strömung im Elektrolytbad besteht in einer Zuströmleitung, die tangential, also senkrecht oder mit einer senkrechten Komponente zur Längsachse, jedoch versetzt zu dieser, in einen unteren, im Einsatz der Vorrichtung mit dem Elektrolytbad gefüllten Abschnitt der Reaktionskammer einmündet. Über die Zuströmleitung wird der während des Elektrolyseprozesses in die gasförmigen Reaktionsprodukte zerlegte Elektrolytanteil laufend ersetzt. Zur Verstärkung der rotierenden Strömung kann im Übrigen auch eine Kreislaufleitung mit Pumpe vorgesehen sein, mittels der beständig ein Teil des in der Reaktionskammer befindlichen Elektrolytbades abgezogen und über die tangentiale Zuströmleitung erneut in die Reaktionskammer zurückgeführt wird.

Ein gleichfalls vorteilhaftes Mittel zum Erzeugen einer rotierenden Strömung im Elektrolytbad besteht in einem Rührwerk, das innerhalb der Reaktionskammer um die Längsachse der Vorrichtung drehbar gelagert angeordnet ist. Das Rührwerk ist bevorzugt mit Rührflügeln ausgerüstet, die parallel zur Längsachse, jedoch radial von dieser beabstandet angeordnet sind. Die Rührflügel stehen beispielsweise zwischen den Elektroden bzw. zwischen Elektroden und Trennwand in der Reaktionskammer vor und zwingen dem Elektrolytbad bei der Betätigung des Rührwerks eine rotierende Bewegung auf.

Eine weiteres vorteilhaftes Mittel zum Erzeugen der rotierenden Strömung im Elektrolytbad besteht darin, dass in einen unteren Abschnitt der Reaktionskammer eine Zuströmleitung einmündet, die mit einer koaxial zur Längsachse angeordneten Dralldüse ausgerüstet ist. Beispielsweise mündet die Zuströmleitung mit der Düse zentral in eine untere Stirnseite der Reaktionskammer ein. Die Dralldüse erzeugt eine Vortexbewegung des einströmenden Fluids um die Längsachse, die sich auf das gesamte Elektrolytbad ausweitet. Eine Düse dieser Art ist beispielsweise in der WO 2022/218636 A1 beschrieben, auf die hier ausdrücklich Bezug genommen wird. Die dort beschriebene Düse weist einen konischen Ringspalt auf, an dessen Spitze eine Düsenöffnung vorgesehen ist. An der Basis des konischen Ringspalts, beabstandet von der Düsenöffnung, mündet eine Flüssigkeitszuführung tangential in den konischen Ringspalt ein. Im Einbau an der erfindungsgemäßen Vorrichtung sind Ringspalt und Düsenöffnung koaxial zur Längsachse der Vorrichtung angeordnet. Durch die tangentiale Zuführung wird die Flüssigkeit im Ringspalt in eine starke Rotationsbewegung versetzt, die sich durch die konische Zuformung des Ringspalts zur Düsenöffnung hin noch beschleunigt. Nach dem Austritt der Flüssigkeit aus der Düse pflanzt sich die Rotationsbewegung der einströmenden Flüssigkeit im gesamten Elektrolytbad fort. Auch bei dieser Ausführungsform kann eine Kreislaufleitung mit Pumpe zur Verstärkung der Strömung vorgesehen sein.

Die erfindungsgemäße Vorrichtung kann vorteilhaft auch als Elektrolysezelle ausgebildet sein, die mit einer Mehrzahl anderer, gleichartiger Vorrichtungen zu einem Elektrolyseblock zusammengeschaltet werden kann.

Die Aufgabe der Erfindung wird auch durch ein Verfahren mit den Merkmalen des Patentanspruchs 7 gelöst.

Bei einem Verfahren zur Gewinnung von Gasen durch elektrochemische Zerlegung eines flüssigen Elektrolyten wird in einer mit einem Elektrolytbad zumindest teilweise gefüllten Reaktionskammer, in der wenigstens eine anodische Elektrode und wenigstens eine kathodische Elektrode angeordnet sind, welche Elektroden als konzentrisch um eine bevorzugt senkrechte Längsachse und radial voneinander beabstandet angeordnete Hohlzylinder ausgebildet sind, ein Gleichstrom durch die Elektroden und den Elektrolyten geleitet. Der Stromfluss führt in an sich bekannter Weise zu einer elektrochemischen Zerlegung des Elektrolyten und zur Entstehung von gasförmigen Reaktionsprodukten, die an den Oberflächen der Elektroden Gasblasen bilden. Die Gasblasen haften zunächst an den Elektrodenoberflächen an, bis sie sich aufgrund ihres Auftriebs von den Oberflächen der Elektroden lösen, aufsteigen und anschließend aufgefangen werden. Um die Ablösung der Gasblasen von den Elektrodenoberflächen zu beschleunigen ist erfindungsgemäß vorgesehen, dass während des Durchleitens des Gleichsstroms zumindest zeitweise das in der Reaktionskammer vorliegende Elektrolytbad in eine um die Längsachse rotierende Strömung versetzt wird.

Die Erzeugung der rotierenden Strömung im Elektrolyten wird bevorzugt durch eine tangentiale Zufuhr von flüssigem Elektrolyt in die Reaktionskammer, durch eine Zufuhr von Elektrolyt über eine koaxial zur Längsachse angeordnete Dralldüse, durch ein in der Reaktionskammer angeordnetes Rührwerk oder durch eine Kombination von zwei dieser drei dieser Maßnahmen bewirkt.

Besonders eignet sich die erfindungsgemäße Vorrichtung und das erfindungsgemäße Verfahren zur Durchführung einer Wasserelektrolyse zwecks Erzeugung von Wasserstoff und/oder Sauerstoff. Als flüssiger Elektrolyt im Elektrolytbad kommt dabei bevorzugt eine wässerige, elektrisch leitende Lösung zum Einsatz, wie beispielsweise Kaliumhydroxid (KOH). Die an den Elektroden entstehenden Gase werden entweder separat oder als Gasgemisch aufgefangen und einer weiteren Verwendung zugeführt.

Anhand der Zeichnungen sollen Ausführungsbeispiele der Erfindung näher erläutert werden. In schematischen Ansichten zeigen, jeweils im Längsschnitt,
Fig. 1: Eine erfindungsgemäße Vorrichtung in einer ersten Ausführungsform,
Fig. 2: Eine erfindungsgemäße Vorrichtung in einer zweiten Ausführungsform,
Fig. 3: Eine erfindungsgemäße Vorrichtung in einer dritten Ausführungsform.

Bei den in den Zeichnungen gezeigten Vorrichtungen 10, 20, 30 handelt es sich um Elektrolyseure, insbesondere zur elektrochemischen Erzeugung von Wasserstoff und Sauerstoff aus Wasser. Die hier gezeigten Ausführungsformen haben einen sehr ähnlichen Aufbau und unterscheiden sich lediglich durch die Mittel zur Erzeugung einer rotierenden Strömung im Elektrolyten; im Übrigen gleichartige Bestandteile sind daher in allen Ausführungsformen mit demselben Bezugszeichen gekennzeichnet.

Die Vorrichtungen 10, 20, 30 weisen jeweils eine Reaktionskammer 11 in Form eines langgestreckten, im Einsatz aufrecht stehenden Hohlzylinders mit ober- und unterseits - mit Ausnahme von unten näher beschriebenen Zu- und Ableitungen - geschlossenen Stirnseiten auf. Innerhalb der Reaktionskammer 11 sind radialsymmetrisch zu einer Längsachse 12 zwei gleichfalls hohlzylindrische Elektroden, eine Kathode 13 und eine Anode 14, angeordnet, die entweder ganz aus einem leitenden Material bestehen oder mit einer geeigneten metallischen Beschichtung versehen sind. Kathode 13 und Anode 14 sind radial beabstandet voneinander angeordnet. Die Größe der jeweiligen Elektrodenfläche kann dem gewünschten Stromfluss angepasst werden; Die Fläche der äußeren Elektrode (hier: Kathode) 13 kann zum Beispiel durch Segmentierung oder durch Ausschnitte reduziert und der Fläche der inneren Elektrode (hier: Anode) 14 angenähert werden, was hier indes nicht gezeigt ist. Um die radiale Abfuhr des Gases zu gewährleisten können zudem, hier gleichfalls nicht gezeigt, die Elektroden 13, 14 porös oder mit Aussparungen ausgeführt sein.

Weiterhin ist in der Reaktionskammer 11 zwischen den Elektroden 13, 14 eine Trennmembran 15 vorgesehen. Die Trennmembran 15 ist in den hier gezeigten Ausführungsbeispielen in einer gewissen radialen Distanz von beiden Elektroden 13, 14 angeordnet; eine solche radiale Distanz ist zwischen Trennmembran 15 und innerer Elektrode 14 im Rahmen der Erfindung jedoch nicht erforderlich. Die Trennmembran 15 ist für Ionen durchlässig, für Gas dagegen undurchlässig; beispielsweise handelt es sich bei der Trennmembran 15 um eine Protonen-Austausch-Membran. Kathode 13 und Anode 14 sind in üblicher Weise über Anschlussleiter 16, 17 an eine hier nicht gezeigte Gleichstromquelle angeschlossen. Weiterhin ist die Reaktionskammer 11 an ihrer oberen Stirnseite mit Gasabzugsleitungen 18, 19 zum Abführen der während der Elektrolyse erzeugten Gase ausgerüstet.

Im Betrieb der Vorrichtung 10, 20, 30 ist die Reaktionskammer 11 bis zu einer Füllhöhe 21 mit einem Elektrolytbad 22, beispielsweise einer wässerigen Lösung aus KOH befüllt. Bei Anlegung einer Spannung von beispielsweise 2 Volt an den Elektroden 13, 14 erfolgt eine elektrochemische Zerlegung des im Elektrolytbad 22 enthaltenen Wassers. Dabei sammelt sich an der Kathode 13 Wasserstoffgas und an der Anode 14 Sauerstoffgas an. Die entstehenden Gase bilden Gasblasen aus, die zunächst noch an der Oberfläche der jeweiligen Elektrode 13, 14 haften, sich dann jedoch aufgrund ihres Auftriebs ablösen und zur Oberfläche des Elektrolytbades 22 aufsteigen, wo sie über die Gasabzugsleitungen 18, 19 abgeführt werden. Die Trennmembran 15 sorgt dabei dafür, dass sich die Gasblasen im Elektrolytbad 22 nicht vermischen.

Die Zeitdauer, während der die Gasblasen an den Elektroden 13, 14 anhaften, bestimmt auch die Größe der dort anhaftenden bzw. im Elektrolytbad 22 aufsteigenden Gasblasen. Je größer diese sind, desto geringer ist die Effizienz des Elektrolyseprozesses. Um daher die anhaftenden Gasblasen möglichst rasch von der Oberfläche der Elektroden 13, 14 zu entfernen, sind die Vorrichtungen 10, 20, 30 mit jeweils unterschiedlichen Mittel ausgerüstet, um das Elektrolytbad 22 innerhalb der Reaktionskammer 11 in eine um die Längsachse 12 rotierende Bewegung zu versetzen. Die rotierende Bewegung erzeugt Fliehkräfte auf den Elektrolyten sowie auf die Gasblasen, die sich in radiale Richtung auswirken. Dabei erfährt der flüssige Elektrolyt aufgrund seiner höheren Dichte eine stärkere Fliehkraft als die Gasblasen auf den Oberflächen der Elektroden 13, 14 und verdrängt diese. Die Gasblasen werden radial nach innen getrieben, wodurch sich im Bereich um die Längsachse 12 und an der Außenoberfläche der Trennmembran 15 Zonen 23, 24 mit einer hohen Konzentration an Gasblasen ausbilden. In der Zone 23 im Bereich der Längsachse 12 sammeln sich die von der inneren Elektrode 14 (hier der Anode) abgelösten Gasblasen, während sich in der Zone 24 die von der äußeren Elektrode 14 (hier der Kathode) abgelösten Gasblasen sammeln.

Die Vorrichtungen 10, 20, 30 unterscheiden sich in den Mitteln zur Erzeugung der rotierenden Strömung im Elektrolytbad 22, wie im Folgenden näher erläutert.

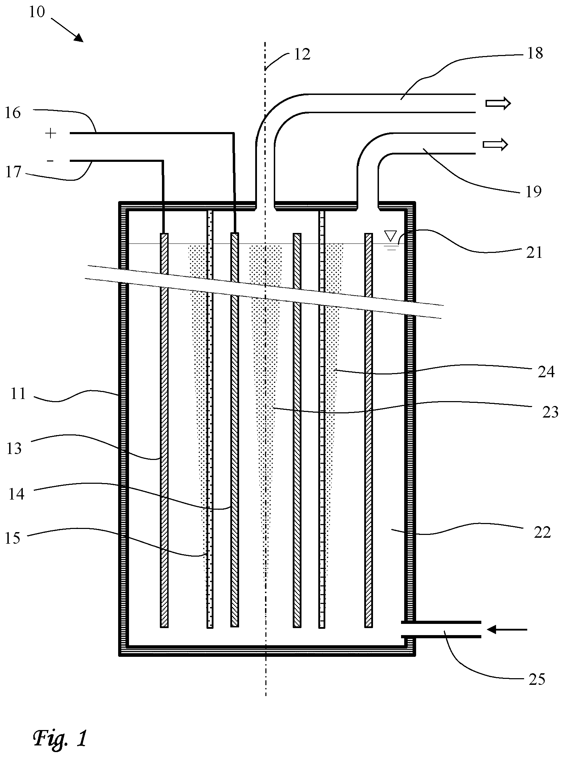

Die in Fig. 1 gezeigte Vorrichtung 10 weist eine Zuströmleitung 25 für den Elektrolyten auf, die tangential in einen unteren Abschnitt der Reaktionskammer 11 einmündet. Durch die Zuströmleitung 25 strömt kontinuierlich Wasser oder flüssiger Elektrolyt in die Reaktionskammer 11 ein, um den während der Elektrolyse verbrachten Wasseranteil zu ersetzen. Durch die tangentiale Zuführung des Elektrolyten entsteht dabei eine um die Längsachse 12 rotierende Strömung des Elektrolytbades 22 in der Reaktionskammer 11. Zur Verstärkung der Strömung kann auch ein (hier nicht gezeigter) Kreislauf vorgesehen sein, mittels dessen beständig Elektrolyt aus der Reaktionskammer 11 entnommen und über die Zuströmleitung 25 wieder in die Reaktionskammer 11 zurückgeführt wird.

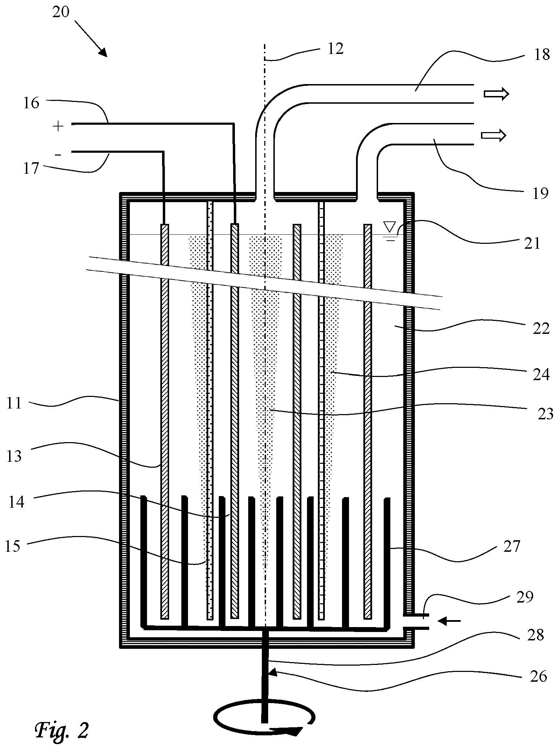

Die in Fig. 2 gezeigte Vorrichtung 20 umfasst ein um die Längsachse 12 drehbar gelagertes Rührwerk 26. Das Rührwerk 26 ist mit Rührblättern 27 ausgerüstet, die fest mit einem Lager 28 des Rührwerks 26 verbunden sind und parallel zur Längsachse 12, jedoch radial beabstandet von dieser, in der Reaktionskammer 11 jeweils zwischen den Elektroden 13, 14 und der Trennmembran 15 vorstehen. Im Betrieb der Vorrichtung 20 wird das Rührwerk 26 mittels eines hier nicht gezeigten, beispielsweise elektrisch betriebenen Motors in eine um die Längsachse 12 rotierende Bewegung versetzt, wodurch zugleich die rotierende Strömung des Elektrolytbades 22 in der Reaktionskammer 11 ausgelöst wird. Die Ersetzung des während des Elektrolysevorgangs verbrauchten Wassers erfolgt über eine Zuströmleitung 29, die in dieser Ausführungsform nicht notwendigerweise zur Erzeugung der rotierenden Bewegung beitragen muss.

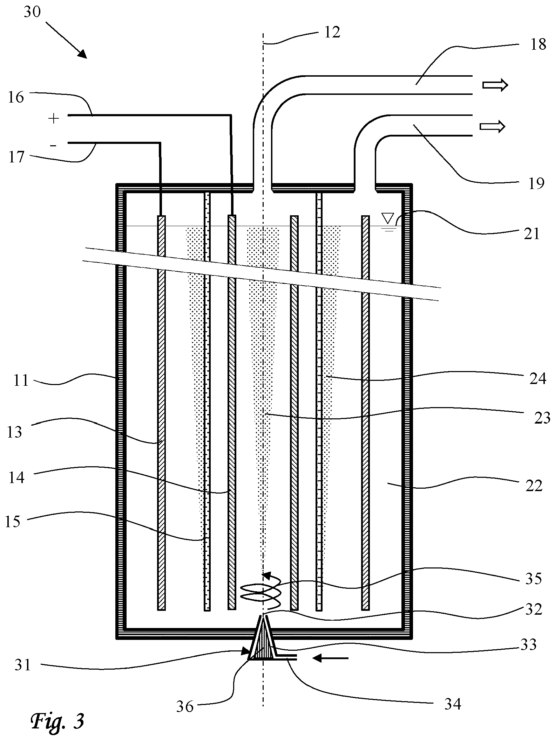

Bei der in Fig. 3 gezeigten Vorrichtung 30 erfolgt die Erzeugung der rotierenden Bewegung des Elektrolytbads 22 mittels einer Dralldüse 31, die an einer Mündungsöffnung 32 zentral, also im Bereich der Längsachse, an der unteren Stirnseite der Reaktionskammer 11 einmündet. Die Düse 31 weist eine konisch geformte Kammer 33 auf, an deren Basis tangential eine Zuströmleitung 34 einmündet. Über die Zuströmleitung 34 wird flüssiger Elektrolyt bzw. Wasser mit hohem Druck in die konische Kammer 33 eingespeist. Die tangentiale Zuführung erzeugt in der Kammer 33 eine rotierende Strömung, die sich aufgrund der konischen Zuformung der Kammer 33 in Richtung zur Mündungsöffnung 32 noch verstärkt. Die Flüssigkeit wird so an der Mündungsöffnung 32 mit einer starken Drallbewegung (wie durch den Pfeil 35 angedeutet) in die Reaktionskammer 11 ausgestoßen und bewirkt dort anschließend eine starke Rotationsbewegung im Elektrolytbad 22. Um den Effekt noch weiter zu erhöhen, kann innerhalb der Kammer 33 ein Führungskegel 36 angeordnet sein, der die aus der Zuströmleitung 34 zuströmende Flüssigkeit in einen vergleichsweise engen konischen Ringraum zwingt und dadurch eine noch stärkere Rotationsbewegung bewirkt. Auch bei dieser Ausführungsform kann zur Verstärkung der Strömung ein (hier nicht gezeigter) Kreislauf vorgesehen sein, mittels dessen beständig Elektrolyt aus der Reaktionskammer 11 entnommen und über die Zuströmleitung 34 wieder in die Reaktionskammer 11 zurückgeführt wird.

Es können im Rahmen der Erfindung im Übrigen auch mehrere der oben beschriebenen Mittel zum Einsatz kommen, oder auch andere Mittel, die zur Ausbildung einer rotierenden Strömung im Elektrolytbad geeignet sind.

Anstelle der hier gezeigten Anordnung der Elektroden 13, 14 kann selbstverständlich die Kathode auch radial innen und die Anode radial außen angeordnet sein. Des Weiteren können die hier gezeigten Vorrichtungen 10, 20, 30 mit einer Mehrzahl gleichartiger Vorrichtungen zu einem Elektrolyseblock zusammengeschaltet werden. Weiterhin können die Vorrichtungen 10, 20, 30 auch als Hochdruckelektrolyseur und/oder als Hochtemperaturelektrolyseur ausgestaltet sein, zu welchem Zweck insbesondere die Reaktionskammer 11 druckfest und/oder hochtemperaturfest ausgebildet sein kann.

### Bezugszeichenliste

- 10: Vorrichtung
- 11: Reaktionskammer
- 12: Längsachse
- 13: Elektrode (Kathode)
- 14: Elektrode (Anode)
- 15: Trennmembran
- 16: Anschlussleiter
- 17: Anschlussleiter
- 18: Gasabzugsleitung
- 19: Gasabzugsleitung
- 20: Vorrichtung
- 21: Füllhöhe
- 22: Elektrolytbad
- 23: Zone
- 24: Zone
- 25: Zuströmleitung
- 26: Rührwerk
- 27: Rührblatt
- 28: Lager
- 29: Zuströmleitung
- 30: Vorrichtung
- 31: Düse
- 32: Mündungsöffnung
- 33: Kammer
- 34: Zuströmleitung
- 35: Pfeil
- 36: Führungskegel

## Patentansprüche

1. Vorrichtung zur Gewinnung von Gasen durch elektrochemische Zerlegung eines flüssigen Elektrolyten, mit einer im Betrieb der Vorrichtung (10, 20, 30) mit einem aus dem flüssigen Elektrolyten bestehenden Elektrolytbad (22) zumindest teilweise gefüllten Reaktionskammer (11), die mit einer Zuströmleitung (25, 29, 34) für den flüssigen Elektrolyten und mit wenigstens einer Gasabzugsleitung (18, 19) zum Abführen von bei der Elektrolyse erzeugten Gasen ausgerüstet ist und in der wenigstens eine anodische Elektrode (14) und wenigstens eine kathodische Elektrode (13) angeordnet sind, welche Elektroden (13, 14) als konzentrisch um eine Längsachse (12) und radial voneinander beabstandet angeordnete Hohlzylinder ausgebildet sind, **dadurch gekennzeichnet,**
**dass** in der Reaktionskammer (11) Mittel zur Erzeugung einer um die Längsachse (12) rotierenden Strömung im Elektrolytbad (22) vorgesehen sind.

2. Vorrichtung nach Anspruch 1, **dadurch gekennzeichnet, dass** in der Reaktionskammer (11), koaxial zu den Elektroden (13, 14), jedoch radial zwischen diesen, eine ionendurchlässige, jedoch gasdichte Trennmembran (15) angeordnet ist.

3. Vorrichtung nach Anspruch 1 oder 2, **dadurch gekennzeichnet, dass** von einem oberen Abschnitt der Reaktionskammer (11) jeweils separate Gasabzugsleitungen (18, 19) für das an der Kathode (13) und das an der Anode (14) erzeugte Gas abführen.

4. Vorrichtung nach einem der vorhergehenden Ansprüche, **gekennzeichnet durch** eine Zuströmleitung (25, 29, 34) für den flüssigen Elektrolyten, die tangential in einen unteren Abschnitt der Reaktionskammer (11) einmündet.

5. Vorrichtung nach einem der vorhergehenden Ansprüche, **dadurch gekennzeichnet, dass** in der Reaktionskammer (11) ein um die Längsachse (12) drehbar gelagertes Rührwerk (26) vorgesehen ist.

6. Vorrichtung nach einem der vorhergehenden Ansprüche, **gekennzeichnet durch** eine Zuströmleitung (25, 29, 34), die mit einer koaxial zur Längsachse (12) angeordneten Dralldüse (31) in einen unteren Abschnitt der Reaktionskammer (11) einmündet.

7. Verfahren zur Gewinnung von Gasen durch elektrochemische Zerlegung eines flüssigen Elektrolyten, bei dem in einer mit einem Elektrolytbad (22) zumindest teilweise gefüllten Reaktionskammer (11), in der wenigstens eine anodische Elektrode (14) und wenigstens eine kathodische Elektrode (13) angeordnet sind, welche Elektroden (13, 14) als konzentrisch um eine Längsachse (12) und radial voneinander beabstandet angeordnete Hohlzylinder ausgebildet sind, ein Gleichstrom durch die Elektroden (13, 14) und den Elektrolyten geleitet wird, wobei durch die elektrochemische Zerlegung des Elektrolyten an den Oberflächen der Elektroden (13, 14) gasförmige Reaktionsprodukte in Form von Gasblasen entstehen,
**dadurch gekennzeichnet,**
**dass** während des Durchleitens des Gleichsstroms zumindest zeitweise das in der Reaktionskammer (11) vorliegende Elektrolytbad (22) in eine um die Längsachse (12) rotierende Strömung versetzt wird.

8. Verfahren nach Anspruch 7, **dadurch gekennzeichnet, dass** die rotierende Strömung durch eine tangentiale Zufuhr von flüssigem Elektrolyt in die Reaktionskammer (11) und/oder durch eine Zufuhr von flüssigem Elektrolyt über eine Dralldüse (31) und/oder durch ein Rührwerk (26) bewirkt wird.

9. Verfahren nach Anspruch 7 oder 8, **dadurch gekennzeichnet, dass** als flüssiger Elektrolyt im Elektrolytbad (22) eine wässerige, elektrisch leitende Lösung zum Einsatz kommt, wobei als Reaktionsprodukte Wasserstoff und Sauerstoff entstehen.
